# EUROPÄISCHE PATENTSCHRIFT

(11) **EP 4 202 392 B1**
(45) Veröffentlichungstag und Bekanntmachung des Hinweises auf die Patenterteilung: **29.01.2025**
(21) Anmeldenummer: 22203343.3
(22) Anmeldetag: 24.10.2022
(51) Int. Cl.: G01L 19/06

(54) **AUFNEHMER MIT EINER MEMBRAN ZUR VERWENDUNG MIT WASSERSTOFFHALTIGEN FLUIDEN MEDIEN**
VESSEL COMPRISING A MEMBRANE FOR USE WITH HYDROGEN-CONTAINING FLUID MEDIA
CAPTEUR AVEC UNE MEMBRANE POUR UTILISATION AVEC DES FLUIDES CONTENANT DE L'HYDROGÈNE

(30) Priorität: 23.12.2021 EP 21217511
(43) Veröffentlichungstag der Anmeldung: 28.06.2023
(73) Patentinhaber: Kistler Holding AG, 8408 Winterthur (CH)
(72) Erfinder: Mastrogiacomo, Giovanni, 8005 Zürich (CH); Märki, Hans Beat, 8483 Kollbrunn (CH); Cadonau, Thomas, 9533 Kirchberg (CH)

(56) Entgegenhaltungen:
- EP-A1- 1 619 487
- EP-A1- 3 327 417
- DE-A1- 102014 104 113

## Beschreibung

### Technisches Gebiet

Die Erfindung betrifft einen Aufnehmer mit einer Membran zur Verwendung mit wasserstoffhaltigen fluiden Medien.

### Stand der Technik

Eine Membran trennt ein fluides Medium in einem ersten Raum von einem zweiten Raum ab. Im Bereich der Druckmesstechnik weisen Aufnehmer oft eine Membran auf, welche eine Messanordnung, beispielsweise ein Aufnehmerelement, vom fluiden Medium, beispielsweise einem gasförmigen und/oder flüssigen Messmedium dessen Druck ermittelt werden soll, trennt. Eine Membran weist dabei üblicherweise eine Fläche mit einer ersten Ausdehnung und einer zweiten Ausdehnung auf, welche erste Ausdehnung und zweite Ausdehnung weitgehend senkrecht zu einer Längsachse ausgebildet sind. In einer dritten Ausdehnung parallel zur Längsachse weist die Membran eine Dicke, auch Wanddicke genannt auf.

Im Folgenden wird unter einem fluiden Medium ein wasserstoffhaltiges fluides Mediums verstanden, welches mindestens 1 Vol% (Volumenprozent) Wasserstoff aufweist.

Die Fläche der Membran weisst üblicherweise einen Bereich auf, der mit dem fluiden Medium in einem ersten Raum in Kontakt ist. Im Fall eines Druckaufnehmers wird der auf den Bereich der Membran wirkende Druck des fluiden Mediums möglichst verlustfrei an ein Druckaufnehmerelement, kurz Aufnehmerelement, weitergeleitet. Damit die Empfindlichkeit einer Messanordnung mit Druckaufnehmerelement, nicht zu stark von der Membran beeinträchtigt wird, muss der Bereich der Membran, der direkt dem fluiden Medium ausgesetzt ist, eine möglichst hohe Nachgiebigkeit beziehungsweise möglichst niedrige Steifigkeit aufweisen. Jedoch darf das Material in diesem Bereich mit niedriger Steifigkeit nicht irreversibel durch den Messdruck verformt werden. Werden Materialien mit einer Dehngrenze von etwa 400 MPa (Megapascal) verwendet, so muss die Membran entsprechend dick ausgefertigt sein, um nicht irreversibel verformt zu werden. Die Membran kann zudem auch dickere Bereiche aufweisen, mit denen die Membran beispielsweise mit einem Aufnehmergehäuse verbunden ist. Die dickeren Bereiche können auch der Stabilität der Membran dienen. Die dickeren Bereiche dienen dabei nicht der Weiterleitung eines Drucks des fluiden Mediums an das Druckaufnehmerelement.

Die Dehngrenze eines metallischen Werkstoffs wird durch die Norm DIN EN ISO 6892-1 ermittelt. Sie entspricht dem R_{P 0,2}. Wert.

Die Fläche einer Membran kann sich weitgehend entlang der ersten Ausdehnung und der zweiten Ausdehnung erstrecken, kann aber in Richtung der Längsachse teilweise gewölbt sein.

Membranen können auch ein fluides Medium von anderen Arten von Aufnehmerelementen trennen, beispielsweise Temperaturaufnehmer, in denen ein Temperaturaufnehmerelement durch eine Membran vom fluiden Medium getrennt ist. In diesem Fall wird die Temperatur des fluiden Mediums durch die Membran an ein Temperaturaufnehmerelement weitergegeben. Auch in diesem Fall sollte die Membran möglichst dünnwandig sein, damit der Wärmedurchgangskoeffizient möglichst gross ist.

Enthält das fluide Medium Wasserstoff, so muss die Membran gegen Wasserstoff sowohl dicht als auch beständig sein. Daher werden für Membranen, welche auch hitzebeständig über 200°C sind, oftmals handelsübliche, wasserstoffbeständige und polykristalline Metalle, wie zum Beispiel der austenitische Stahl 1.4404 (auch bekannt als 316 L) mit einer Dehngrenze von etwa 400 MPa bei Raumtemperatur oder die nickelbasierte Legierung 2.4819 (auch bekannt als C-276) mit einer Dehngrenze von ebenfalls etwa 400 MPa bei Raumtemperatur verwendet. Diese Werkstoffe charakterisieren sich durch eine mittlere Korngrösse grösser 20 µm. Diese grobkörnigen, polykristallinen Metalle sind als Werkstoffe für dünne Membranen mit einer Dicken von weniger als 500 µm ungeeignet, da sie aufgrund der geringen Dehngrenze die Auslegung von dünnwandigen Membranen nicht erlauben. Eine dünne Membran wäre schnell irreversibel deformierbar. Auf Grund der wenigen Kristallkörner im dünnwandigen Bereich der Membranen verhält sich der Werkstoff zudem nicht isotrop. Zudem ist der Diffusionsweg für molekularen und/oder atomaren Wasserstoff entlang der Korngrenzen zwischen den Kristallkörnern durch grobkörnige Bereiche relativ kurz. Dies ist nachteilig, da Wasserstoff somit gut auf kurzem Weg durch die Membran diffundieren kann.

In Metallen und Legierungen bezeichnet der Begriff Gefüge die Mikrostruktur des Werkstoffes. Ein Gefüge ist beispielsweise Martensit.

Die Bezeichnung 1.4404 wie auch andere in Folgenden genannten Werkstoffnummer entsprechen der DIN EN 10027-2.

Dringt molekularer und/oder atomarer Wasserstoff in einen metallischen Werkstoff ein, so kommt es zu sogenannter Wasserstoffversprödung. Es besteht in Folge die Gefahr eines Sprödbruchs bei Belastung des Werkstoffs.

Unter Wasserstoffversprödung wird eine Änderung der Duktilität und Festigkeit eines Metalls oder einer Metalllegierung durch das Eindringen und die anschliessende Einlagerung von Wasserstoff in der Gitterstruktur des Metalls oder der Metalllegierung verstanden. In der Folge kann es zu wasserstoffbedingter Rissbildung kommen, wodurch der Einsatz anfälliger Materialien in Anwendungen mit Wasserstoffkontakt begrenzt ist.

Bekanntermassen gilt, dass ein Metall oder eine Metalllegierung mit hoher Festigkeit eher zur Wasserstoffversprödung neigt als ein Metall mit geringerer Festigkeit.

Die Werkstoffe Stahl 1.4404 (auch bekannt als 316 L) und Legierung 2.4819 (auch bekannt als C-276) gelten allgemein als korrosionsbeständig. Sie weisen eine niedrige Dehngrenze auf und sind daher schon bei geringerer Krafteinwirkung plastisch deformierbarer als Materialien mit einer höheren Dehngrenze. Um diesen Nachteil auszugleichen werden Membranen oft in einer hohen Dicke grösser 500 µm gefertigt. Dies ist jedoch auf Grund der hohen trägen Masse einer dicken Membran nachteilig. Auch weist eine Dicke Membran eine höhere Steifigkeit auf.

In einer bekannten Ausführungsform weisen Drucksensoren hinter der Membran einen Raum gefüllt mit einem fluiden Druckübertragungsmedium auf. In dieser Ausführungsform ist die Gefahr einer plastischen irreversiblen Deformation der Membran geringer, da das fluide Druckübertragungsmedium einer Deformation der Membran entgegenwirkt. Das fluide Druckübertragungsmedium, beispielsweise ein wenig kompressibles Öl, überträgt den auf die Membran wirkenden Druck an ein von der Membran beabstandetes Messelement. Die Membran muss weiterhin den Druck möglichst verlustfrei übertragen, d.h. die Membran sollte vorteilhafterweise dünn ausgestaltet sein. Beinhaltet das zu messende fluide Medium Wasserstoff, so reichert sich mit der Zeit Wasserstoff im fluiden Druckübertragungsmedium an, wodurch das Volumen zunimmt und sich in Folge die Membran nach aussen wölbt. Die Membran wird durch den durch die Membran diffundierten Wasserstoff aufgeblasen. Dies kann zum einen die Membran schädigen, zum anderen verändert es die Druckverhältnisse um das Messelement. Eine Langzeitstabilität des Sensors ist durch Diffusion des molekularen und/oder atomaren Wasserstoffs durch die Membran negativ beeinflusst.

Die Schrift US20050109114A1 beschreibt einen Aufnehmer mit einer Membran aus Legierung 2.4819 (auch bekannt als C-276). Das Material selbst gilt zwar als korrosionsbeständig, ist auf Grund der geringen Dicke der Membran jedoch nicht dicht gegenüber Wasserstoff. Die unzureichende Beständigkeit gegenüber Wasserstoff soll in US20050109114A1 durch eine Beschichtung der Membran erlangt werden.

Aus DE102014104113A1 ist ein Drucksensor zur Druckmessung von Wasserstoff oder eines wasserstoffhaltigen Fluids bekannt, wobei sowohl der Druckanschluss als auch der Druckmessumformer jeweils aus einem austenitischen Chrom-Nickel-Molybdän-Stahl hergestellt sind.

Ein Dehnungssensor für korrosive Medien ist aus EP1619487A1 bekannt, wobei ein Körper, der eine Dehnung in Reaktion auf eine äußere Spannung erzeugt aus austenitischem, ausscheidungshärtendem Fe-Ni hitzebeständigem Stahl gebildet ist.

Aus EP3327417A1 ist eine metallische Membran mit einer Platte bekannt, welche einem Druck eines Mediums ausgesetzt ist, wobei die Metallstruktur der Platte parallel zur flachen Plattenoberfläche gewachsen ist.

Aufgabe der Erfindung ist es eine Membran derart zu verbessern, dass die erwähnten Nachteile verringert werden. Es ist eine weitere Aufgabe der Erfindung eine verbesserte Korrosionsbeständigkeit der Membran gegenüber atomarem und/oder molekularem Wasserstoff zu erlangen.

### Darstellung der Erfindung

Die Aufgabe wird durch die Merkmale des unabhängigen Anspruchs gelöst.

Die Erfindung betrifft einen Aufnehmer zur Ermittlung eines Drucks eines wasserstoffhaltigen fluiden Mediums. Das wasserstoffhaltige fluide Medium ist in einem ersten Raum angeordnet. Der Aufnehmer weist ein dem fluiden Medium zugewandtes druckseitiges Ende auf. Der Aufnehmer weist ein Gehäuse auf, welches einen zweiten Raum aufweist. Der Aufnehmer weist eine Messanordnung auf. Die Messanordnung ist im zweiten Raum angeordnet. Der Aufnehmer weist am druckseitigen Ende eine Membran zur hermetischen Trennung des ersten Raumes mit wasserstoffhaltigem fluiden Medium vom zweiten Raum auf. Die Membran weist einen metallischen Werkstoff auf. Der metallische Werkstoff weist ein Gefüge aus Martensit auf. Der metallische Werkstoff der Membran ist erfindungsgemäss aus einem hochlegierten Martensit ausgeführt.

Die Membran ist bestimmt zur Trennung eines Raums mit wasserstoffhaltigem fluiden Medium von einem weiteren Raum. Ein wasserstoffhaltiges fluiden Medium weist mindestens 1 Vol% Wasserstoff auf und wird im Folgenden auch als korrosiv oder korrosives fluides Medium bezeichnet.

Unter Korrosion wird allgemein eine messbare Veränderung eines Werkstoffes verstanden. Korrosion kann durch Einwirkung von einer Vielzahl von Stoffen stattfinden. So ist Korrosion von metallischen Werkstoffen im Zusammenhang mit verschiedenen Laugen oder Säuren, Gasen wie Wasserstoff oder Sauerstoff, Salzwasser und vielen anderen Stoffen bekannt. Im Sinne dieser Beschreibung wird unter Korrosion jedoch, wenn nicht anders angegeben, eine Korrosion durch atomaren oder molekularen Wasserstoff verstanden. Die erfindungsgemässe Membran muss eine geringe Neigung zur Korrosion durch Wasserstoff aufweisen.

Der feinkörnige Stahl mit einem Gefüge aus Martensit, kurz aus Martensit, weist überraschenderweise eine geringe Neigung zur Wasserstoffversprödung und daher eine gewisse Wasserstoffbeständigkeit auf. Der metallische Werkstoff der Membran ist daher gegen Wasserstoff korrosionsbeständig.

Das Gefüge aus Martensit zeichnet sich durch einen mittleren Korndurchmesser von kleiner 20 µm aus und sind daher für die Herstellung von dünnwandigen Membranen mit Dicken von kleiner 500 µm geeignet. Das Bauteil hat durch den mittleren Korndurchmesser von kleiner 20 µm isotrope physikalische Eigenschaften, was bei Verwendung der Membran vorteilhaft ist. Andernfalls können beispielsweise nachteilig richtungsabhängige Effekte bei Belastung der Membran auftreten. Zudem wird die Diffusion von Wasserstoff durch die Membran durch die vielen Korngrenzen des feinkörnigen Werkstoffes im Gegensatz zu grobkörnigen Werkstoffen verringert. Die Verwendung von Martensit im Zusammenhang mit wasserstoffhaltigen fluiden Medien ist überraschend, da Martensit auf Grund seiner relativ hohen Festigkeit allgemein als ungeeignet für den Kontakt mit wasserstoffhaltigen fluiden Medien angesehen wird. In VYTVYTS'KYI V I: "Strength of Alloys Based on Iron, Nickel, and Titanium in High-Pressure Hydrogen", MATERIALS SCIENCE, KLUWER ACADEMIC PUBLISHERS-CONSULTANTS BUREAU, NE, Bd. 40, Nr. 6, 1. November 2004 (2004-11-01), Seiten 717-730, ISSN: 1573-885X, DOI: 1 0.1 007/S1 1003-005-0108-8 wird eine "catastrophic degradation in hydrogen" (katastrophale Degradierung in Wasserstoff) beschrieben.

Es versteht sich, dass die Membran nicht gänzlich eine Dicke kleiner 500 µm aufweisen muss. So kann die Membran auch dickere Bereiche aufweisen, mit denen die Membran beispielsweise mit einem Aufnehmergehäuse verbunden ist. Die dickeren Bereiche können auch der Stabilität der Membran dienen. Wichtig ist jedoch, dass die Membran dünnwandige Bereiche mit niedrigerer Steifigkeit aufweist.

Vorteilhaft ist der metallische Werkstoff der Membran ein hochlegierter Martensit mit teilkohärenten oder inkohärenten Ausscheidungen.

Unter dem Begriff "hochlegiert" wird in Anlehnung an Dubbel - Taschenbuch für den Maschinenbau, 14. Auflage, Springer-Verlag 1981, Kapitel 3.1.4 ein Martensit mit einem Legierungsgehalt > 5 Gew.% (Gewichtsprozent) verstanden. Der Legierungsgehalt ist der Massengehalt eines Legierungselementes. Dadurch weist der Aufnehmer eine erhöhte allgemeine Korrosionsbeständigkeit auf. Als Legierungselemente werden in diesem Zusammenhang ausschliesslich Cr (Chrom), Mo (Molybdän) oder Ni (Nickel) verstanden. Diese Legierungselemente erhöhen die allgemeine Korrosionsbeständigkeit. Dadurch ist auch eine erhöhte Korrosionsbeständigkeit gegenüber Wasserstoff gegeben.

Unter einem Martensit mit teilkohärenten Ausscheidungen oder einem Martensit mit inkohärenten Ausscheidungen wird ein Martensit verstanden, bei dem durch Wärmebehandlung Ausscheidungshärtung, auch Aushärten oder Abschreckalterung, oder englisch "precipitation hardening" (Ausscheidungshärtung), oder "age hardening" (Aushärtung) oder "particle hardening" (Teilchenhärtung) sogenannte Ausscheidungen gebildet werden. Teilkohärenten oder inkohärente Ausscheidungen im Sinne dieser Beschreibung sind in Werkstoffkunde - Stahl - Band 1, Verein Deutscher Eisenhüttenleute (Herausgeber), Springer Verlag 1984 oder in Pirlog, Madalina, and P. K. Pranzas. "CHARACTERIZATION OF COPPER PRECIPITATES IN FE-CU ALLOYS WITH SMALL-ANGLE NEUTRON SCATTERING" beschrieben.

In Ausscheidungen bilden Atome eines Legierungselements Ansammlungen, genannt Aggregate. Dies geht mit einer Änderung der Härte des Werkstoffs einher. Bekannt ist die Abhängigkeit zwischen Härte eines Werkstoffes über die sogenannte thermische Auslagerdauer. Dies ist häufig in Form eines Diagramms gezeigt, in welchem die Härte eines Werkstoffes über die thermische Auslagerdauer dargestellt ist. Die Härte steigt mit zunehmender Auslagerdauer bis zu einem globalen Maximum mit maximalen Härte an und fällt danach wieder ab. Die thermische Auslagerdauer ist eine Zeitangabe, welche die Dauer der thermischen Behandlung bei einer bestimmten Temperatur angibt. Die maximale Härte Hₘₐₓ eines Werkstoffes ist bei einer Auslagerdauer t(maximale Härte) erreicht. Bei dieser maximalen Härte Hₘₐₓ liegen sogenannte teilkohärente Ausscheidungen vor. Bei längeren Auslagerungsdauern liegen inkohärente Ausscheidungen vor. Die Ausscheidungen bilden sich bevorzugt an Korngrenzen innerhalb des Werkstoffes, wie in Metallkunde, E. Hornbogen und H. Warlimont, 4. Auflage, Springer Verlag 2001, beschrieben.

Inkohärente und teilkohärente Ausscheidungen wirken als Wasserstoffsenken. An Wasserstoffsenken lagert sich Wasserstoff an. Dadurch wird verhindert, dass der angelagerte Wasserstoff weiter in den Werkstoff eindringen kann. Die Mobilität des Wasserstoffs ist verringert gegenüber einem Werkstoff mit kohärenten Ausscheidungen, da sich kohärente Ausscheidungen innerhalb eines Korns befinden, Wasserstoff aber bevorzugt entlang von Korngrenzen im Werkstoff mobil ist.

Besonders bevorzugt ist der Werkstoff der Membran aus einem hochlegierten Lanzettmartensit mit teilkohärenten und/oder inkohärenten Ausscheidungen ausgeführt. Unter einem Lanzettmartensit wird ein in Werkstoffkunde - Stahl - Band 1, Verein Deutscher Eisenhüttenleute (Herausgeber), Springer Verlag 1984, Kapitel B6.4.4 oder in Metallkunde, E. Hornbogen und H. Warlimont, 4. Auflage, Springer Verlag 2001, Kapitel 15.2 beschriebener Werkstoff verstanden. Ein Lanzettmartensit weist in seinem Gefüge abgeflachten Lanzetten auf, die in Schichten angeordnet sind. Lanzettmartensit ist auch als Blockmartensit oder Massivmartensit oder im englischen als "lath-martensite" oder "blokky-martensit" oder "massivemartensite" bekannt. Es hat sich gezeigt, dass die Mobilität von Wasserstoff in einem Lanzettmartensit weiter verringert ist gegenüber einem Martensit ohne Lanzetten.

Vorteilhafterweise weist der metallische Werkstoff der Membran einen Chromgehalt von mindestens 10 Gew.% und einen Nickelgehalt von mindestens 4 Gew.% auf. Metallische Werkstoffe mit jeweils niedrigeren Anteilen genannter Elemente sind weniger resistent gegenüber allgemeiner Korrosion. Der Gewichtsanteil von Nichtmetallen ist vorteilhafterweise kleiner 0.20 Gew.%. Dies ist vorteilhaft, da ein höherer Gewichtsanteil Nichtmetalle zu Materialfehlern und einem spröderen Werkstoff führt. Dies ist für die Herstellung von Membranen unvorteilhaft. Spröde Werkstoffe haben einen geringeren Widerstand gegen instabilen Rissfortschritt.

Vorteilhafterweise weist der metallische Werkstoff der Membran eine Dehngrenzen von mindestens 600 MPa und höchstens 1500 MPa auf. Die hohe Dehngrenze grösser 600 MPa verhindert eine irreversible plastische Deformation des metallischen Werkstoffes. Um die Steifigkeit der Membran weiterhin niedrig zu halten, darf die Dehngrenze des metallischen Werkstoffes bei gegebener Geometrie der Membran mit einer Dicke kleiner 500 µm nicht oberhalb 1500 MPa liegen. Ein typischer Durchmesser einer Membran eines Aufnehmers zur Ermittlung eines Drucks beträgt üblicherweise zwischen 2.0 mm und 20 mm.

Vorteilhafterweise weist der metallische Werkstoff der Membran eine Härte nach Rockwell C zwischen 38 und 50 HRC auf. Bei geringerer Härte weist der Werkstoff kohärente Ausscheidungen auf. Bei zu hoher Härte nimmt die Neigung zur Wasserstoffversprödung wieder zu.

Alle Werte wie Dehngrenze, Steifigkeit, Zugfestigkeit, Härte, usw. sind bei Raumtemperatur angegeben soweit nicht explizit anders angegeben. Unter Raumtemperatur wird eine Temperatur von 20°C verstanden.

Der metallische Werkstoff der Membran weist vorteilhafterweise eine mittlere Korngrösse kleiner 20 µm auf. Dadurch weist der Werkstoff auch bei filigranen Strukturen isotrope physikalische Eigenschaften auf. Zudem ist ein Diffusionsweg entlang der Korngrenzen wesentlich länger als bei einem Werkstoff mit grobkörnigen Gefüge mit einer mittleren Korngrösse grösser 20 µm. Dadurch kann Wasserstoff durch den langen Diffusionsweg nur schlecht entlang der Korngrenzen in den Werkstoff eindringen oder durch den Werkstoff diffundieren. Durch die kleine Korngrösse ist der Werkstoff geeignet für die Herstellung von dünnwandigen Membranen. Dadurch, dass selbst dünne Strukturen mit einer Dicke kleiner 500 µm mehrere Schichten Körner aufweisen, ist der metallische Werkstoff zudem hermetisch dicht gegenüber Wasserstoff. Aus gleichem Grund weisen dünne Strukturen isotrope physikalische Eigenschaften auf.

Unter hermetisch Dicht wird eine Leckrate gegenüber Helium von weniger als 10⁻⁶ mbar l/s (Millibar Liter pro Sekunde) verstanden.

Es hat sich gezeigt, dass der metallische Werkstoff der Membran einen Restaustentitgehalt kleiner 30 Vol.% (Volumenprozent) aufweisen darf und weiterhin die oben beschriebenen Vorteile einer Membran aus dem metallischen Werkstoff bestehen. Bevorzugt wird ein Restaustentitgehalt zwischen 0 Vol.% und 10 Vol.% des metallischen Werkstoffs. Der Restaustentitgehalt wird über die Norm ASTM E 975 bestimmt.

Besonders vorteilhaft weist die Membran einen metallischen Werkstoff mit einem Restaustenitgehalt von grösser 1 Vol.% auf. Es hat sich gezeigt, dass sich an Korngrenzen durch den metallischen Werkstoff diffundierender Wasserstoff bevorzugt an Restaustentit anreichert. Der Restaustentit ist somit eine Wasserstoffsenke, in der Wasserstoff zurückgehalten wird nicht wieder entweichen kann. Der am Restaustentit zurückgehaltene Wasserstoff kann so nicht tiefer in den metallischen Werkstoff diffundieren. Ein Restaustentitgehalt grösser 1 Vol.% verringert die Mobilität des Wasserstoffs. Dadurch ist die Membran beständiger gegen Korrosion. Durch die verringerte Mobilität des Wasserstoffs im metallischen Werkstoff der Membran ist auch die Leckrate gegenüber atomaren oder molekularen Wasserstoff verringert.

Die Membran ist aus einem Werkstoff gefertigt, der nicht durchlässig ist gegenüber atomaren oder molekularen Wasserstoff. Nicht durchlässig ist ein Werkstoff im Sinne dieser Beschreibung, wenn eine 500 µm dicke Membran aus diesem Werkstoff eine Leckrate gegenüber atomaren oder molekularen Wasserstoff von weniger als 10⁻⁶ mbar l/s aufweist, wobei die Membran maximal 500 µm dick ist. Membran hat dabei mindestens eine Fläche von 1 mm². Dies ist vorteilhaft da verhindert wird, dass sich im zweiten Raum Wasserstoff anreichert. Ein Anreichern von Wasserstoff im zweiten Raum könnte zu einer Wölbung der Membran führen. Dies kann die Membran schädigen. Zudem kann ein Anreichern von Wasserstoff zu einem Druckanstieg im zweiten Raum führen, wodurch die Druckverhältnisse um das Messelement verändert sind. Eine Druckmessung ist dadurch verfälscht.

Besonders vorteilhaft als metallischer Werkstoff ist die vergütete Stahlgüte 1.4418 mit einer Dehngrenze kleiner oder gleich 900 MPa bei Raumtemperatur. Besonders vorteilhaft als metallischer Werkstoff ist auch die ausscheidungsgehärtete Stahlgüte 1.4534 mit einer Dehngrenze kleiner oder gleich 1500 MPa. Besonders vorteilhaft als metallischer Werkstoff ist zudem die ausscheidungsgehärtete Stahlgüte 1.4614 mit einer Dehngrenze kleiner oder gleich 1500 MPa. Auch vorteilhaft ist die Stahlgüte 1.4548 mit einer Dehngrenze kleiner oder gleich 1500 MPa.

Üblicherweise weist der metallische Werkstoff einen Wärmeausdehnungskoeffizient zwischen 10·10⁻⁶ K⁻¹ und 12·10⁻⁶ K⁻¹ im Temperaturbereich zwischen 20°C und 100°C auf.

Vorteilhafterweise weist der metallische Werkstoff eine Oberfläche auf, welche dem fluiden Medium zugewandt ist und welche Oberfläche frei von Vertiefungen, Einstichen, Bohrungen, oder Sicken ist, um die Adsorptionsneigung des fluiden Mediums tief zu halten. Dies bewirkt eine schlechtere Adsorption des fluiden Mediums an der Membran, da Fehlstellen in der Oberfläche, sogenannte Oberflächendefekte, eine Adsorption begünstigen. Der Vorteil liegt in einer erhöhten Resistenz gegen Korrosion der Oberfläche durch das fluide Medium.

Besonders vorteilhaft weist die Oberfläche des metallischen Werkstoffs, welche dem fluiden Medium zugewandt ist, eine Welligkeit auf, wobei die auf Grund dieser Welligkeit verursachte Kerbspannung kleiner 1500 MPa ist.

Unter Welligkeit wird eine Abweichung in einem Teilbereich der Oberfläche von der Ebene eines benachbarten Teilbereichs der Oberfläche. Bei Membranen mit einer runden Oberfläche im Bereich, welcher bei Verwendung in direktem Kontakt mit dem fluiden Medium ist, sind konzentrische runde Wellen in der Oberfläche der Membran bekannt, um die Nachgiebigkeit der Membran zu erhöhen. Jedoch Verursachen solche Wellen in Abhängigkeit des gewählten Radius Kerbspannung im Werkstoff. Kerben im Sinne der Kerbspannung müssen nicht spitz zulaufend sein, sondern sind auch durch gerundete Oberflächen, durch Querschnittsänderungen, durch Bohrungen und ähnliches gegeben. Die Kerbspannung ist daher von den geometrischen Dimensionen der Membran bzw. der Kerbe und vom metallischen Werkstoff Membran abhängig. Die Kerbspannung wird mit den geometrischen Abmessungen und Werkstoffparametern wie Zugfestigkeit, Elastizität, E-Modul, Dehngrenze (R_{p0,2}) usw., mittels der Finite Element Analysis bestimmt. Die Bestimmung ist beispielsweise in "Rechnerischer Festigkeitsnachweis für Maschinenbauteile - FKM-Richtlinie", herausgegeben vom VDMA-Verlag, 7. Auflage 2020 oder in "Betriebsfestigkeit mit FEM: schnell verstehen & anwenden" von Stefan Einbock und Florian Mailänder, 2018 beschrieben. Eine hohe Kerbspannung des metallischen Werkstoffs begünstigt Rissbildung. Eine Kerbe oder ein Riss wirken sich negativ auf die Korrosionsbeständigkeit einer Oberfläche aus. Durch den Riss können nachteilig korrosive Elemente eines fluiden Mediums in den Werkstoff Gefüge eindringen und entlang des Risses den Werkstoff schädigen. Dies ist auch als Spannungsrisskorrosion bekannt.

Alternativ kann vorteilhafterweise für eine runde Membran mit einer Dicke kleiner 500 µm die Oberfläche der Membran zumindest im Bereich, welcher bei Verwendung im Kontakt mit dem fluiden Medium ist, mit einer Welligkeit derart ausgeführt sein, dass Übergänge zwischen zwei nicht parallelen Ebenen mit Radien von mindestens 100 µm und/oder Facetten von mindestens 30 µm aufweisen. Hierdurch wird die Spannungsrisskorrosion vermindert im Vergleich zu Membranen welche Übergänge zwischen zwei nicht parallelen Ebenen mit kleineren Dimensionen aufweisen.

Vorteilhafterweise weist die Membran zumindest im Bereich, welcher bei Verwendung im Kontakt mit dem fluiden Medium ist, eine Oberflächengüte mit einem Mittenrauwert Ra kleiner 0.8 µm auf. Der Mittenrauwert Ra wird durch DIN EN ISO 1302 bestimmt. Eine Oberfläche mit einem grösseren Mittenrauwert bietet dem fluiden Medium eine grössere Fläche, an der Atome oder Moleküle des fluiden Mediums adsorbieren können verglichen mit einer Oberfläche mit einem geringeren Mittenrauwert. Auch weist eine Oberfläche mit Mittenrauwert unter 0.8 µm weniger Oberflächendefekte im Kristallgitter des metallischen Werkstoffs auf verglichen mit einer Oberfläche mit höherem Mittenrauwert. Defekte begünstigen eine Adsorption und chemische Reaktionen an der Oberfläche und führen zu einer schnelleren Korrosion der Oberfläche. Eine niedrige Mittenrauheit kleiner 0.8 µm erhöht somit die Korrosionsbeständigkeit der Oberfläche.

Bevorzugt wird der metallische Werkstoff der Membran durch eine diffusionslose Umwandlung aus einem Austenit hergestellt.

Die Membran kann eine Beschichtung auf der dem fluiden Medium zugewandten Seite aufweisen. Die vorgehende Beschreibung der Eigenschaften und Merkmale der Membran in ihren Ausführungsformen, insbesondere des metallischen Werkstoffes und der Oberfläche, ist dabei explizit mit der Beschichtung vereinbar. Eine Beschichtung kann die Korrosionsbeständigkeit der Membran weiter erhöhen.

Die Membran ist geeignet eine innere Beschichtung aufzuweisen. Da die innere Beschichtung nicht mit dem fluiden Medium in Kontakt ist, kann sie in physischen und chemischen Parametern von einer gegebenenfalls vorhandenen Beschichtung auf der dem fluiden Medium zugewandten Seite der Membran abweichen. So kann beispielsweise innere Beschichtung oder Beschichtung elektrisch isolierend ausgeführt sein. Auch kann die Beschichtung auf der dem fluiden Medium zugewandten Seite der Membran eine Beständigkeit gegenüber anderen Stoffen aufweisen, welche die innere Beschichtung nicht aufweisen muss.

Eine Messanordnung zur Ermittlung eines Drucks eines fluiden Mediums ist beispielsweise mindestens ein piezoelektrischer Kristall, welcher in Abhängigkeit eines an der Membran anliegenden Druckes piezoelektrische Ladungen generiert. Der piezoelektrische Kristall ist in einer Ausführungsform in einer Vorspannhülse angeordnet, welche eine Vorspannung auf den piezoelektrischen Kristall ausübt. So sind sowohl negative als auch positive Druckänderungen erfassbar. Eine Messanordnung kann alternativ auch kapazitive Messelemente enthalten, welche eine mechanische Verformung als Änderung einer Kapazität erfassen.

Eine Messanordnung kann alternativ auch piezoresistive Messelemente oder Dehnmessstreifen, auch als Dehnungsmesstreifen oder DMS bezeichnet, aufweisen, welche eine mechanische Verformung als Änderung eines elektrischen Widerstands erfassen. Dem Fachmann sind weitere Messanordnungen bekannt, welche in Aufnehmern zur Ermittlung eines Drucks eines fluiden Mediums verwendet werden.

Die Membran ist am druckseitigen Ende des Gehäuses angeordnet und trennt die Messanordnung hermetisch vom fluiden Medium. Das Gehäuse und die Membran sind mit einer stoffschlüssigen Verbindungen verbunden. Eine stoffschlüssige Verbindung ist beispielsweise eine Schweissverbindung oder eine Lötverbindung. Auch eine stoffschlüssige Verbindung mit einem Klebstoff ist denkbar.

Die Membran weist einen ersten Bereich auf, welcher bei Verwendung im Kontakt mit dem fluiden Medium ist. Die Membran weist einen zweiten Bereich auf, welcher bei Verwendung nicht in Kontakt mit dem fluiden Medium ist. Die stoffschlüssige Verbindung ist im zweiten Bereich angeordnet. Stoffschlüssige Verbindungen als Lötverbindung oder Schweissverbindung ausgeführt weisen üblicherweise eine höhere Anzahl von Rissen oder Poren auf. Auch im Fall von einer stoffschlüssigen Verbindung durch Klebstoff kann der Klebstoff durch das fluide Medium Schaden nehmen. Vorteilhafterweise ist daher die stoffschlüssige Verbindung im zweiten Bereich angeordnet, welcher nicht dem fluiden Medium ausgesetzt ist.

Weist die Membran eine Beschichtung auf, so ist diese zumindest im gesamten ersten Bereich angeordnet, kann sich allerdings auch zumindest teilweise über den zweiten Bereich erstrecken.

Ein zweiter Bereich ist nicht im Kontakt mit dem fluiden Medium im Sinne dieser Beschreibung, wenn die Konzentration korrosiver Bestandteile des fluiden Mediums im zweiten Bereich maximal 1% der Konzentration korrosiver Bestandteile im ersten Bereich entspricht.

Erster und zweiter Bereich können Beispielsweise durch ein Dichtungselement voneinander getrennt sein. Je nach Anwendung des Aufnehmers bezüglich Temperaturbereich und Druckbereich kann eine Metalldichtung wie eine Kupferdichtung, eine Dichtung aus Stählen 1.4404 oder 1.4301, ein Dichtungselement aus einer Metalllegierung oder metallbeschichtete Dichtungen aus einer Metalllegierung verwendet werden. Auch sind für bestimmte Temperaturbereiche und Druckbereiche Kunststoffdichtungen bekannt, beispielsweise aus Polytetrafluorethylen, Fluorelastomeren oder Nitrilverbindungen. Auch andere Materialien kommen als Dichtungselement in Frage.

Der Aufnehmer wird bevorzugt verwendet zur Ermittlung eines Drucks eines fluiden Mediums, wenn das fluide Medium korrosiv ist und herkömmliche Aufnehmer nicht verwendet werden können.

Besonders bevorzugt findet der Aufnehmer Verwendung zur Ermittlung eines Drucks eines fluiden Mediums, welches zumindest einen Anteil molekularen oder atomaren Wasserstoff aufweist. Wasserstoff führt bekanntermassen in einer Vielzahl metallischer Werkstoffe zur sogenannten Wasserstoffversprödung, welche bei thermischer und/oder mechanischer Beanspruchung zu Wasserstoffversprödung und einer Minderung der Dehngrenze führt. Ein oben beschriebener Aufnehmer vermindert diese Nachteile erheblich.

Alle beschriebenen Ausführungsformen eines Aufnehmers sind als Ausführungsform mit einem im zweiten Raum angeordneten Druckübertragungsmedium möglich. Es sind jedoch auch alle beschriebenen Ausführungsformen ohne ein im zweiten Raum angeordnetes Druckübertragungsmedium ausführbar.

Die Erfindung umfasst auch einen Aufnehmer zur Ermittlung einer Temperatur eines fluiden Mediums. Der Aufnehmer weist ein dem fluiden Medium zugewandtes druckseitiges Ende auf. Der Aufnehmer weist ein Gehäuse auf. Der Aufnehmer weist eine Messanordnung zur Ermittlung einer Temperatur eines fluiden Mediums auf. Die Messanordnung ist innerhalb des Gehäuses angeordnet. Der Aufnehmer weist eine Membran in einer der oben beschriebenen Ausführungsformen auf.

### Kurze Beschreibung der Zeichnungen

Im Folgenden wird die Erfindung beispielhaft unter Beizug der Figuren näher erklärt.
- Fig. 1: zeigt eine schematische Schnittansicht einer Ausführungsform eines Aufnehmers mit einer Ausführungsform einer erfindungsgemässen Membran,
- Fig. 2: zeigt eine schematische Teilansicht einer Schnittansicht eines Aufnehmers mit einer Membran nach Fig. 1, welcher in einer Wandung angeordnet ist;
- Fig. 3: zeigt eine schematische Darstellung eines Diagramms Härte über thermische Auslagerungsdauer eines Werkstoffes bei einer bestimmten Temperatur.

### Wege zur Ausführung der Erfindung

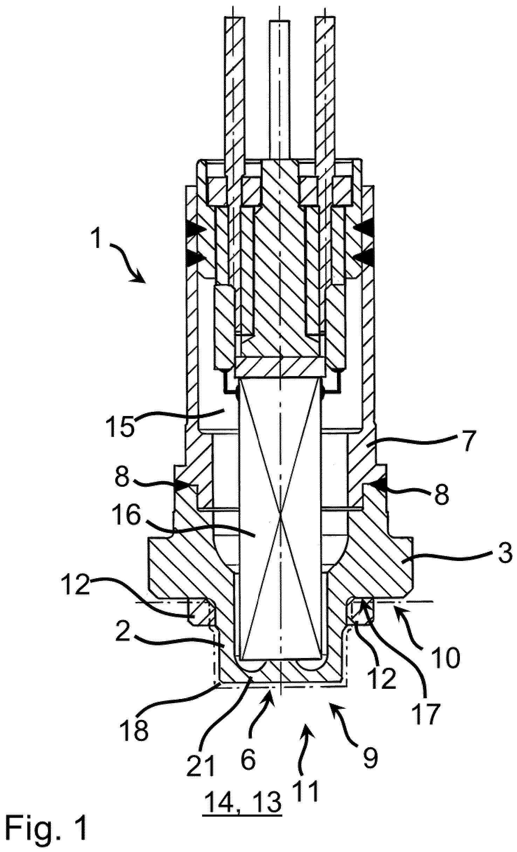

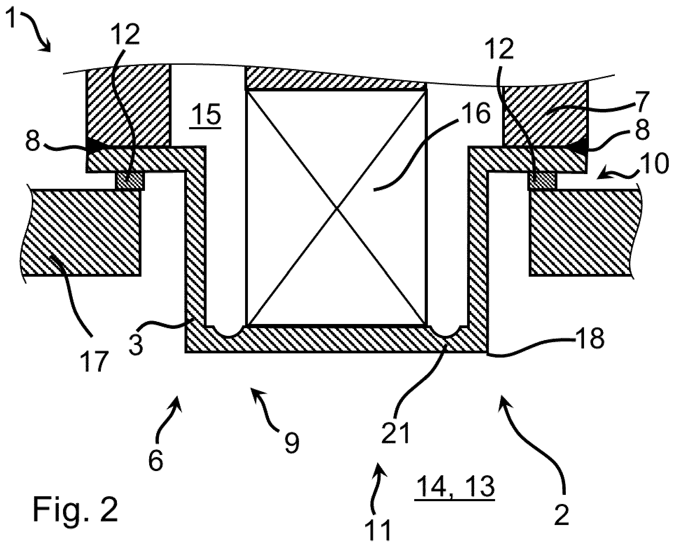

Fig. 1 und Fig. 2 zeigen jeweils eine schematische Schnittansicht einer Ausführungsform eines Aufnehmers 1 mit einer Membran 2. Der Aufnehmer 1 ist geeignet zur Ermittlung eines Drucks eines fluiden Mediums 13. Der Aufnehmer 1 weist ein dem fluiden Medium zugewandtes druckseitiges Ende 11 auf. Der Aufnehmer 1 weist ein Gehäuse 7 auf. Im Gehäuse 7 ist eine Messanordnung 16 angeordnet.

Die Membran 2 ist am druckseitigen Ende 11 des Aufnehmers 1 angeordnet und trennt die Messanordnung 16 hermetisch vom fluiden Medium 13.

In der nicht massstabsgetreuen Darstellung der Fig. 1 ist eine optionale Beschichtung des metallischen Werkstoffs 3 als strichpunktierte Linie dargestellt.

Die Fig. 2 zeigt eine weitere Ausführungsform einer Membran. Die Dicke der Membran 2 ist zur besseren Verdeutlichung jeweils nicht proportional dargestellt.

Die Membran 2 der Fig. 1 und 2 weist einen metallischen Werkstoff 3 auf und trennt einen ersten Raum 14 von einem zweiten Raum 15 hermetisch. Im ersten Raum 14 ist ein fluides Medium 13 angeordnet, von dem mindestens eine physikalische Grösse ermittelbar ist. Eine physikalische Grösse ist beispielsweise ein Druck und/oder eine Temperatur.

Die Membran 2 weist einen ersten Bereich 9 auf, welcher bei Verwendung der Membran 2 im Kontakt mit dem fluiden Medium 13 ist. Die Membran 2 weist einen zweiten Bereich 10 auf, welcher bei Verwendung nicht im Kontakt mit dem fluiden Medium 13 ist, wie in Fig. 1 und 2 dargestellt.

Die Oberfläche 6 der Membran 2, welche bei Verwendung im direkten Kontakt mit dem fluiden Medium 13 ist, weist vorteilhafterweise eine Welligkeit auf, wobei die auf Grund dieser Welligkeit verursachte Kerbspannung kleiner 1500 MPa ist. Die Oberfläche der Membran ist in den Fig. 1 und 2 dargestellt. Übergänge zwischen zwei nicht parallelen Ebenen weisen Radien 18 von mindestens 100 µm und/oder Facetten 18 von mindestens 30 µm auf.

Das Gehäuse 7 und die Membran 2 des Aufnehmers 1 sind mit einer stoffschlüssigen Verbindung 8 verbunden. Die Membran 2 weist einen ersten Bereich 9 auf, welcher bei Verwendung im Kontakt mit dem fluiden Medium 13 ist. Die Membran 2 weist einen zweiten Bereich auf 10, welcher bei Verwendung nicht in Kontakt mit dem fluiden Medium 13 ist. Erster Bereich 9 und zweiter Bereich 10 sind bei Verwendung des Aufnehmers 1 durch ein Dichtungselement 12 voneinander getrennt. Die stoffschlüssige Verbindung 8 ist bei jeder dargestellten Ausführungsform im zweiten Bereich 10 angeordnet.

Es ist jedoch auch denkbar, die stoffschlüssige Verbindung 8 in einem Bereich anzuordnen, welcher bei Verwendung der Membran 2 in Kontakt mit dem fluiden Medium 13 ist. Hierbei wird vorteilhafterweise die stoffschlüssige Verbindung 8 mit der Beschichtung 4 vollständig überdeckt (nicht dargestellt).

Fig. 2 zeigt den Aufnehmer 1 zur Ermittlung eines Drucks eines fluiden Mediums 13 in eine Wandung 17 eingesetzt. Die Wandung 17 kann beispielsweise eine Wandung 17 eines Tanks für ein fluides Medium 13, eines Kompressors, einer Wärmepumpe, einer Kältemaschine, einer Leitung für ein fluides Medium 13, einer Brennkammer eines Verbrennungsmotors oder einer Gasturbine sein.

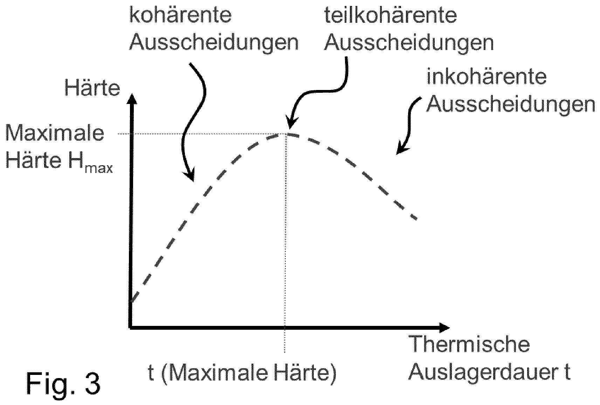

Figur 3 zeigt schematisch die Abhängigkeit eines metallischen Werkstoffs, beispielsweise eines ausscheidungshärtenden Martensits, von der thermischen Auslagerdauer t bei einer bestimmten Auslagerungstemperatur.

Die in dieser Schrift offenbarten Ausführungsformen des Aufnehmers 1 oder der Membran 2 sind selbstverständlich miteinander kombinierbar. Es sind explizit in dieser Schrift auch Ausführungsformen einbezogen, welche eine Kombination der Merkmale hierin beschriebener Ausführungsformen aufweisen.

### Bezugszeichenliste

- 1: Aufnehmer
- 2: Membran
- 3: metallischer Werkstoff
- 6: Oberfläche
- 7: Gehäuse
- 8: stoffschlüssige Verbindung
- 9: erster Bereich
- 10: zweiter Bereich
- 11: druckseitiges Ende
- 12: Dichtungselement
- 13: fluides Medium
- 14: erster Raum
- 15: zweiter Raum
- 16: Messanordnung
- 17: Wandung
- 18: Phase / Facette / Rundung
- 21: dünnwandiger Bereich

## Patentansprüche

1. System aufweisend einen Aufnehmer (1), ein wasserstoffhaltiges fluides Medium (13) und einen ersten Raum (14); welcher Aufnehmer (1) den Druck des wasserstoffhaltigen fluiden Mediums (13) ermittelt; wobei das wasserstoffhaltige fluide Medium (13) im ersten Raum (14) angeordnet ist; wobei der Aufnehmer (1) ein dem fluiden Medium (13) zugewandtes druckseitiges Ende (11) aufweist; wobei der Aufnehmer (1) ein Gehäuse (7) aufweist, welches einen zweiten Raum (15) aufweist; wobei der Aufnehmer (1) eine Messanordnung (16) aufweist; wobei die Messanordnung (16) im zweiten Raum (15) angeordnet ist; wobei der Aufnehmer (1) am druckseitigen Ende (11) eine Membran (2) aufweist zur hermetischen Trennung des ersten Raumes (14) mit wasserstoffhaltigem fluiden Medium (13) vom zweiten Raum (15); wobei die Membran (2) einen metallischen Werkstoff (3) aufweist; **dadurch gekennzeichnet, dass** der metallische Werkstoff (3) aus einem hochlegierten Martensit ausgeführt ist; wobei ein hochlegierter Martensit ein Martensit mit einem Legierungsgehalt > 5 Gew.% ist; wobei der Legierungsgehalt ein Massengehalt eines Legierungselementes ist; wobei unter einem Legierungselement ausschliesslich Chrom, Molybdän oder Nickel verstanden werden.

2. System aufweisend einen Aufnehmer (1) und ein wasserstoffhaltiges fluides Medium (13) nach einem der vorgehenden Ansprüche; **dadurch gekennzeichnet, dass** der metallische Werkstoff (3) der Membran (2) aus einem hochlegierten Martensit mit teilkohärenten oder inkohärenten Ausscheidungen ausgeführt ist.

3. System aufweisend einen Aufnehmer (1) und ein wasserstoffhaltiges fluides Medium (13) nach einem der vorgehenden Ansprüche; **dadurch gekennzeichnet, dass** der metallische Werkstoff (3) der Membran (2) aus einem hochlegierten Lanzettmartensit mit teilkohärenten oder inkohärenten Ausscheidungen ausgeführt ist.

4. System aufweisend einen Aufnehmer (1) und ein wasserstoffhaltiges fluides Medium (13) nach einem der vorgehenden Ansprüche; **dadurch gekennzeichnet, dass** der metallische Werkstoff (3) gegenüber Wasserstoff korrosionsbeständig ist; und dass der metallische Werkstoff (3) nicht durchlässig ist für atomaren Wasserstoff, wobei die Leckrate der Membran gegenüber Wasserstoff weniger als 10⁻⁶ mbar l/s beträgt, wobei die Membran maximal 500 µm dick ist.

5. System aufweisend einen Aufnehmer (1) und ein wasserstoffhaltiges fluides Medium (13) nach einem der vorgehenden Ansprüche; **dadurch gekennzeichnet, dass** der Massengehalt von mindestens einem der Elemente Chrom oder Molybdän oder Nickel im metallischen Werkstoff (3) 5 Gew.% übersteigt.

6. System aufweisend einen Aufnehmer (1) und ein wasserstoffhaltiges fluides Medium (13) nach einem der vorgehenden Ansprüche 1 bis 4, **dadurch gekennzeichnet, dass** der metallische Werkstoff (3) der Membran (2) einen Chromgehalt von mindestens 10 Gew.% aufweist.

7. System aufweisend einen Aufnehmer (1) und ein wasserstoffhaltiges fluides Medium (13) nach einem der vorgehenden Ansprüche, **dadurch gekennzeichnet, dass** der metallische Werkstoff (3) der Membran (2) eine mittlere Korngrösse kleiner 20 µm aufweist, wodurch der metallische Werkstoff (3) geeignet ist für die Herstellung von dünnwandigen Membranen (2) mit geometrischen Ausdehnungen kleiner 500 µm.

8. System aufweisend einen Aufnehmer (1) und ein wasserstoffhaltiges fluides Medium (13) nach einem der vorgehenden Ansprüche, **dadurch gekennzeichnet, dass** der metallische Werkstoff (3) der Membran einen Restaustentitgehalt kleiner 30 Vol.% aufweist, bevorzugt einen Restaustentitgehalt zwischen 0 Vol.% und 10 Vol.%.

9. System aufweisend einen Aufnehmer (1) und ein wasserstoffhaltiges fluides Medium (13) nach dem vorgehenden Anspruch, **dadurch gekennzeichnet, dass** der metallische Werkstoff (3) der Membran einen Restaustentitgehalt grösser 1 Vol.% aufweist.

10. System aufweisend einen Aufnehmer (1) und ein wasserstoffhaltiges fluides Medium (13) nach einem der vorgehenden Ansprüche, **dadurch gekennzeichnet, dass** der metallische Werkstoff (3) der Membran (2) eine Dehngrenze von mindestens 600 MPa und höchstens 1500 MPa aufweist.

11. System aufweisend einen Aufnehmer (1) und ein wasserstoffhaltiges fluides Medium (13) nach einem der vorgehenden Ansprüche, **dadurch gekennzeichnet, dass** der metallische Werkstoff (3) der Membran (2) einen Chromgehalt von mindestens 10 Gew.%, und einen Nickelgehalt von mindestens 4 Gew.% aufweist; und dass der Gewichtsanteil von Nichtmetallen kleiner 0.20 Gew.% ist oder dass der metallische Werkstoff (3) der Membran (2) die vergütete Stahlgüte 1.4418 mit einer Dehngrenze kleiner oder gleich 900 MPa bei Raumtemperatur aufweist oder die ausscheidungsgehärtete Stahlgüte 1.4534 mit einer Dehngrenze kleiner oder gleich 1500 MPa oder die ausscheidungsgehärtete Stahlgüte 1.4614 mit einer Dehngrenze kleiner oder gleich 1500 MPa oder die Stahlgüte 1.4548 mit einer Dehngrenze kleiner oder gleich 1500 MPa aufweist; und dass der Werkstoff einen Wärmeausdehnungskoeffizient zwischen 10·10⁻⁶ K⁻¹ und 12·10⁻⁶ K⁻¹, bevorzugt 11.3·10⁻⁶ K⁻¹, im Temperaturbereich zwischen 20°C und 100°C aufweist.

12. System aufweisend einen Aufnehmer (1) und ein wasserstoffhaltiges fluides Medium (13) nach einem der vorgehenden Ansprüche, **dadurch gekennzeichnet, dass** eine Oberfläche (6) des metallischen Werkstoffs (3), welche dem fluiden Medium (13) zugewandt ist, eine Welligkeit aufweist; wobei die auf Grund dieser Welligkeit verursachte Kerbspannung kleiner 1500 MPa ist oder dass die Oberfläche (6) zumindest im Bereich, welcher bei Verwendung im Kontakt mit dem fluiden Medium ist, eine Welligkeit aufweist, wobei Übergänge zwischen zwei nicht parallelen Ebenen Radien von mindestens 100 µm und/oder Facetten von mindestens 30 µm aufweisen.

13. System aufweisend einen Aufnehmer (1) und ein wasserstoffhaltiges fluides Medium (13) nach einem swe vorgehenden Ansprüche, **dadurch gekennzeichnet, dass** die Membran (2) zumindest im Bereich, welcher bei Verwendung im Kontakt mit dem fluiden Medium (13) ist, eine Oberflächengüte mit einem Mittenrauwert Ra kleiner 0.8 µm aufweist.

14. System aufweisend einen Aufnehmer (1) und ein wasserstoffhaltiges fluides Medium (13) nach einem der vorgehenden Ansprüche, **dadurch gekennzeichnet, dass** der metallische Werkstoff der Membran (2) eine Härte nach Rockwell C zwischen 38 und 50 HRC aufweist.

15. System aufweisend einen Aufnehmer (1) und ein wasserstoffhaltiges fluides Medium (13) nach einem der vorgehenden Ansprüche; **dadurch gekennzeichnet, dass** Gehäuse (7) und Membran (2) mit einer stoffschlüssigen Verbindungen (8) verbunden sind; dass die Membran (2) einen ersten Bereich (9) aufweist, welcher bei Verwendung im Kontakt mit dem fluiden Medium (13) ist; dass die Membran (2) einen zweiten Bereich aufweist, welcher bei Verwendung nicht in Kontakt mit dem fluiden Medium ist (13); und dass die stoffschlüssige Verbindung (8) im zweiten Bereich angeordnet ist.

## Claims

1. System comprising a transducer (1), a hydrogen-containing fluid medium (13) and a first space (14); which transducer (1) determines the pressure of the hydrogen-containing fluid medium (13); wherein the hydrogen-containing fluid medium (13) is arranged in the first space (14); wherein the transducer (1) comprises a pressure side end (11) facing the fluid medium (13); wherein the transducer (1) comprises a housing (7) which comprises a second space (15); wherein the transducer (1) comprises a measuring arrangement (16); wherein the measuring arrangement (16) is arranged in the second space (15); wherein at the pressure side end (11) the transducer (1) comprises a diaphragm (2) for hermetically separating the first space (14) containing the hydrogen-containing fluid medium (13) from the second space (15); wherein the diaphragm (2) comprises a metallic material (3); **characterized in that** the metallic material (3) is made of a high-alloy martensite; wherein a high-alloy martensite is a martensite with an alloy content > 5 wt.%; wherein the alloy content is the content by mass of an alloying element; wherein alloying elements are understood to mean exclusively chromium, molybdenum or nickel.

2. System comprising a transducer (1) and a hydrogen-containing fluid medium (13) according to any of the preceding claims, **characterized in that** the metallic material (3) of the diaphragm (2) is made of a high-alloy martensite with partially coherent or incoherent precipitates.

3. System comprising a transducer (1) and a hydrogen-containing fluid medium (13) according to any of the preceding claims, **characterized in that** the metallic material (3) of the diaphragm (2) is made of a high-alloy lancet martensite with partially coherent or incoherent precipitates.

4. System comprising a transducer (1) and a hydrogen-containing fluid medium (13) according to any of the preceding claims; **characterized in that** the metallic material (3) is resistant to hydrogen corrosion; and **in that** the metallic material (3) is not permeable to atomic hydrogen with a leakage rate of the diaphragm for hydrogen of less than 10⁻⁶ mbar l/s, wherein the diaphragm thickness is at most 500 µm.

5. System comprising a transducer (1) and a hydrogen-containing fluid medium (13) according to any of the preceding claims, **characterized in that** the content by mass of at least one of the elements chromium or molybdenum or nickel in the metallic material (3) exceeds 5% by weight.

6. System comprising a transducer (1) and a hydrogen-containing fluid medium (13) according to any of the preceding claims 1 to 4, **characterized in that** the metallic material (3) of the diaphragm (2) has a chromium content of at least 10% by weight.

7. System comprising a transducer (1) and a hydrogen-containing fluid medium (13) according to any of the preceding claims, **characterized in that** the metallic material (3) of the diaphragm (2) has an average grain size of less than 20 µm, which renders the metallic material (3) suitable for the production of thin-walled diaphragms (2) with geometric dimensions of less than 500 µm.

8. System comprising a transducer (1) and a hydrogen-containing fluid medium (13) according to any of the preceding claims, **characterized in that** the metallic material (3) of the diaphragm has a residual austenite content of less than 30% by volume, preferably a residual austenite content of between 0% and 10% by volume.

9. System comprising a transducer (1) and a hydrogen-containing fluid medium (13) according to the preceding claim, **characterized in that** the metallic material (3) of the diaphragm has a residual austenite content greater than 1% by volume.

10. System comprising a transducer (1) and a hydrogen-containing fluid medium (13) according to any of the preceding claims, **characterized in that** the metallic material (3) of the diaphragm (2) has a yield strength of at least 600 MPa and at most 1500 MPa.

11. System comprising a transducer (1) and a hydrogen-containing fluid medium (13) according to any of the preceding claims, **characterized in that** the metallic material (3) of the diaphragm (2) has a chromium content of at least 10% by weight and a nickel content of at least 4% by weight; and **in that** the proportion by weight of non-metals is less than 0.20% by weight or **in that** the metallic material (3) of the diaphragm (2) is of quenched and tempered grade 1.4418 steel having a yield strength of less than or equal to 900 MPa at room temperature or of precipitation-hardened grade 1.4534 steel having a yield strength of less than or equal to 1500 MPa or of precipitation-hardened grade 1.4614 steel having a yield strength of less than or equal to 1500 MPa or of grade 1.4548 steel having a yield strength of less than or equal to 1500 MPa; and **in that** the material has a coefficient of thermal expansion between 10·10⁻⁶ K⁻¹ and 12·10⁻⁶ K⁻¹, preferably 11.3·10⁻⁶ K⁻¹, in the temperature range between 20°C and 100°C.

12. System comprising a transducer (1) and a hydrogen-containing fluid medium (13) according to any of the preceding claims, **characterized in that** a surface (6) of the metallic material (3) which faces the fluid medium (13) has a corrugation; wherein the notch stress caused by this corrugation is less than 1500 MPa, or **in that** the surface (6) has a corrugation at least in the region which is in contact with the fluid medium during use, wherein transitions between two non-parallel planes have radii of at least 100 µm and/or facets of at least 30 µm.

13. System comprising a transducer (1) and a hydrogen-containing fluid medium (13) according to any of the preceding claims, **characterized in that** the diaphragm (2) has a surface quality at least in the region which is in contact with the fluid medium (13) during use with a mean roughness index Ra of less than 0.8 µm.

14. System comprising a transducer (1) and a hydrogen-containing fluid medium (13) according to any of the preceding claims, **characterized in that** the metallic material of the diaphragm (2) has a hardness according to Rockwell C between 38 and 50 HRC.

15. System comprising a transducer (1) and a hydrogen-containing fluid medium (13) according to any of the preceding claims; **characterized in that** the housing (7) and the diaphragm (2) are connected by a material bonding connection (8); **in that** the diaphragm (2) has a first region (9) which is in contact with the fluid medium (13) during use; **in that** the diaphragm (2) has a second region which is not in contact with the fluid medium (13) during use; and **in that** the material bonding connection (8) is positioned in the second region.

## Revendications

1. Système comprenant un transducteur (1), un milieu fluide contenant de l'hydrogène (13) et un premier espace (14) ; ledit transducteur (1) détecte la pression du milieu fluide contenant de l'hydrogène (13) ; dans lequel le milieu fluide contenant de l'hydrogène (13) est disposé dans le premier espace (14) ; dans lequel le transducteur (1) comprend une extrémité côté pression (11) orientée vers le milieu fluide (13) ; dans lequel le transducteur (1) comprend un boîtier (7) comprenant un second espace (15) ; dans lequel le transducteur (1) comprend un dispositif de mesure (16) ; dans lequel le dispositif de mesure (16) est disposé dans le second espace (15) ; dans lequel le transducteur (1) comprend, à son extrémité côté pression (11), un diaphragme (2) pour séparer hermétiquement le premier espace (14) avec le milieu fluide contenant de l'hydrogène (13) du second espace (15) ; dans lequel le diaphragme (2) comprend un matériau métallique (3) ; **caractérisé en ce que** le matériau métallique (3) est fabriqué d'une martensite fortement alliée ; dans lequel une martensite fortement alliée est une martensite ayant une teneur en alliage > 5 % en poids ; dans lequel la teneur en alliage est une teneur en masse d'un élément d'alliage ; dans lequel par élément d'alliage on entend exclusivement le chrome, le molybdène ou le nickel.

2. Système comprenant un transducteur (1) et un milieu fluide contenant de l'hydrogène (13) selon l'une quelconque des revendications précédentes, **caractérisé en ce que** le matériau métallique (3) du diaphragme (2) est constitué d'une martensite fortement alliée avec des précipités partiellement cohérents ou incohérents.

3. Système comprenant un transducteur (1) et un milieu fluide contenant de l'hydrogène (13) selon l'une quelconque des revendications précédentes, **caractérisé en ce que** le matériau métallique (3) du diaphragme (2) est constitué d'un martensite fortement allié en lancettes avec des précipités partiellement cohérents ou incohérents.

4. Système comprenant un transducteur (1) et un milieu fluide contenant de l'hydrogène (13) selon l'une quelconque des revendications précédentes ; **caractérisé en ce que** le matériau métallique (3) est résistant à la corrosion par l'hydrogène ; et **en ce que** le matériau métallique (3) n'est pas perméable à l'hydrogène atomique, dans lequel le taux de fuite du diaphragme pour l'hydrogène est inférieur à 10⁻⁶ mbar l/s, l'épaisseur du diaphragme étant d'au plus 500 µm.

5. Système comprenant un transducteur (1) et un milieu fluide contenant de l'hydrogène (13) selon l'une quelconque des revendications précédentes, **caractérisé en ce que** la teneur en masse d'au moins l'un des éléments chrome ou molybdène ou nickel dans le matériau métallique (3) dépasse 5 % en poids.

6. Système comprenant un transducteur (1) et un milieu fluide contenant de l'hydrogène (13) selon l'une quelconque des revendications précédentes 1 à 4, **caractérisé en ce que** le matériau métallique (3) du diaphragme (2) a une teneur en chrome d'au moins 10 % en poids.

7. Système comprenant un transducteur (1) et un milieu fluide contenant de l'hydrogène (13) selon l'une quelconque des revendications précédentes, **caractérisé en ce que** le matériau métallique (3) du diaphragme (2) a une granulométrie moyenne inférieure à 20 µm, ce qui rend le matériau métallique (3) apte à la production de diaphragmes (2) à parois minces ayant des dimensions géométriques inférieures à 500 µm.

8. Système comprenant un transducteur (1) et un milieu fluide contenant de l'hydrogène (13) selon l'une quelconque des revendications précédentes, **caractérisé en ce que** le matériau métallique (3) du diaphragme a une teneur en austénite résiduelle inférieure à 30 % en volume, de préférence une teneur en austénite résiduelle comprise entre 0 % en volume et 10 % en volume.

9. Système comprenant un transducteur (1) et un milieu fluide contenant de l'hydrogène (13) selon la revendication précédente, **caractérisé en ce que** le matériau métallique (3) du diaphragme a une teneur en austénite résiduelle supérieure à 1% en volume.

10. Système comprenant un transducteur (1) et un milieu fluide contenant de l'hydrogène (13) selon l'une quelconque des revendications précédentes, **caractérisé en ce que** le matériau métallique (3) du diaphragme (2) a une limite d'élasticité d'au moins 600 MPa et d'au plus 1500 MPa.

11. Système comprenant un transducteur (1) et un milieu fluide contenant de l'hydrogène (13) selon l'une quelconque des revendications précédentes, **caractérisé en ce que** le matériau métallique (3) du diaphragme (2) a une teneur en chrome d'au moins 10 % en poids et une teneur en nickel d'au moins 4 % en poids ; et **en ce que** la proportion en poids de non-métaux est inférieure à 0,20 % en poids ou **en ce que** le matériau métallique (3) du diaphragme (2) est constitué d'un acier traité de nuance 1.4418 ayant une limite d'élasticité inférieure ou égale à 900 MPa à température ambiante ou en acier durci par précipitation de nuance 1.4534 ayant une limite d'élasticité inférieure ou égale à 1500 MPa ou en acier durci par précipitation de nuance 1.4614 ayant une limite d'élasticité inférieure ou égale à 1500 MPa ou en acier de nuance 1.4548 ayant une limite d'élasticité inférieure ou égale à 1500 MPa ; et **en ce que** le matériau a un coefficient de dilatation thermique compris entre 10·10⁻⁶ K⁻¹ et 12·10⁻⁶ K⁻¹, de préférence 11,3·10⁻⁶ K⁻¹, dans la plage de température comprise entre 20°C et 100°C.

12. Système comprenant un transducteur (1) et un milieu fluide contenant de l'hydrogène (13) selon l'une quelconque des revendications précédentes, **caractérisé en ce qu'**une surface (6) du matériau métallique (3) qui fait face au milieu fluide (13) présente une ondulation ; dans lequel la contrainte en fond d'entaille causée par cette ondulation est inférieure à 1500 MPa, ou **en ce que**, au moins dans la région qui est en contact avec le milieu fluide pendant l'utilisation, la surface (6) présente une ondulation, dans lequel les transitions entre deux plans non parallèles ont des rayons d'au moins 100 µm et/ou des facettes d'au moins 30 µm.

13. Système comprenant un transducteur (1) et un milieu fluide contenant de l'hydrogène (13) selon l'une quelconque des revendications précédentes, **caractérisé en ce que**, au moins dans la région qui est en contact avec le milieu fluide (13) pendant l'utilisation, le diaphragme (2) présente une qualité de surface avec une rugosité moyenne arithmétique Ra inférieur à 0,8 µm.

14. Système comprenant un transducteur (1) et un milieu fluide contenant de l'hydrogène (13) selon l'une quelconque des revendications précédentes, **caractérisé en ce que** le matériau métallique du diaphragme (2) présente une dureté selon Rockwell C comprise entre 38 et 50 HRC.

15. Système comprenant un transducteur (1) et un milieu fluide contenant de l'hydrogène (13) selon l'une quelconque des revendications précédentes ; **caractérisé en ce que** le boîtier (7) et le diaphragme (2) sont reliés par une liaison de matières (8) ; **en ce que** le diaphragme (2) comporte une première zone (9) qui est en contact avec le milieu fluide (13) pendant l'utilisation ; **en ce que** le diaphragme (2) comporte une seconde zone qui n'est pas en contact avec le milieu fluide (13) pendant l'utilisation ; et **en ce que** la liaison de matières (8) est positionné dans la seconde zone.
